# FASCICULE DE BREVET EUROPEEN

(11) **EP 4 298 009 B1**
(45) Date de publication et mention de la délivrance du brevet: **26.02.2025**
(21) Numéro de dépôt: 22702758.8
(22) Date de dépôt: 11.01.2022
(51) Int. Cl.: B62D 43/10, B62D 43/00

(54) **PROCÉDÉ ET DISPOSITIF DE CONTRÔLE D'UN DISPOSITIF DE VERROUILLAGE D'UNE TRAPPE D'ACCÈS À UN COMPARTIMENT DE ROUE DE SECOURS D'UN VÉHICULE**
VERFAHREN UND VORRICHTUNG ZUR STEUERUNG EINER VORRICHTUNG ZUR VERRIEGELUNG EINER ZUGANGSKLAPPE AN EINEM ERSATZRADFACH EINES FAHRZEUGS
METHOD AND DEVICE FOR CONTROLLING A DEVICE FOR LOCKING AN ACCESS HATCH TO A SPARE WHEEL COMPARTMENT OF A VEHICLE

(30) Priorité: 26.02.2021 FR 2101891
(43) Date de publication de la demande: 03.01.2024
(73) Titulaire: Stellantis Auto SAS, 78300 Poissy (FR)
(72) Inventeur: ZAIMI, Mounir, Casablanca, 20480 (MA)
(74) Mandataire: ESIP
(86) Numéro de dépôt international: PCT/FR2022/050059
(87) Numéro de publication internationale: WO 2022/180312

(56) Documents cités:
- FR-A1- 2 687 629
- FR-A1- 2 733 731
- FR-A1- 2 995 277

## Description

### Domaine technique

La présente invention revendique la priorité de la demande française 2101891 déposée le 26.02.2021. L'invention concerne les procédés et dispositifs de contrôle d'un dispositif de verrouillage d'une trappe d'accès à un compartiment de roue de secours d'un véhicule, par exemple un véhicule automobile. L'invention concerne également un procédé et un dispositif de contrôle du verrouillage / déverrouillage d'un dispositif de verrouillage associé à une trappe d'accès d'un compartiment de roue de secours.

### Arrière-plan technologique

Certains véhicules automobiles comprennent dans leur coffre un compartiment ou un logement prévu pour recevoir une roue de secours. Ce compartiment est fermé par une trappe donnant accès au compartiment, la trappe servant aussi de fond pour le coffre. La roue de secours et le compartiment qui la reçoit sont alors accessibles depuis le coffre, une fois ce dernier ouvert. Un des problèmes associés à un tel arrangement est qu'une personne qui a accès au coffre peut facilement accéder à la roue de secours et au compartiment prévu pour la recevoir, avec le risque de vol de la roue de secours ou le risque que des objets soient déposés dans le compartiment à l'insu du conducteur. On connait du document FR2733731 un agencement d'un réceptacle pour roue de secours dans un véhicule automobile dans lequel le réceptacle est monté basculant sur le corps du véhicule entre une position de rangement de la roue de secours et une position d'accès au réceptacle. Le réceptacle peut basculer à l'intérieur d'un coffre du véhicule, entre la position de rangement, dans laquelle il affleure un plancher de charge délimitant le coffre, et la position d'accès, dans laquelle il fait saillie au-dessus du plancher de charge. De préférence, il est prévu des moyens de sollicitation du réceptacle en position d'accès et des moyens de verrouillage du réceptacle en position de rangement.

On connait du document FR2995277 un dispositif d'alerte pour véhicule automobile comportant un capteur apte à détecter le retrait de la roue de secours hors de son logement et des moyens d'avertissement comprenant un module de télécommunication sans fil adapté à envoyer un message d'alerte à destination d'un terminal mobile prédéfini lorsque la roue a été extraite du logement.

### Résumé de l'invention

Un objet de la présente invention est de limiter le vol d'une roue de secours stockée dans un compartiment prévu dans le coffre d'un véhicule.

Un autre objet de la présente invention est de sécuriser l'accès au compartiment de roue de secours dans le coffre d'un véhicule.

Selon un premier aspect, l'invention concerne un procédé de contrôle d'un dispositif de verrouillage d'une trappe d'accès à un compartiment de roue de secours prévu dans un coffre d'un véhicule, le procédé étant mis en oeuvre par au moins un calculateur embarqué dans le véhicule, le procédé comprenant les étapes suivantes :
- réception d'une requête d'activation d'un service configuré pour permettre un accès à l'intérieur d'un coffre du véhicule ;
- détection d'une ouverture d'un ouvrant donnant accès à l'intérieur du coffre ;
- transmission d'une commande de verrouillage du dispositif de verrouillage de la trappe d'accès pour prévenir tout accès dans le compartiment.

Selon une variante, le procédé comprend en outre les étapes suivantes :
- détection d'une fermeture de l'ouvrant donnant accès à l'intérieur du coffre ;
- transmission d'une commande de déverrouillage du dispositif de verrouillage de la trappe d'accès pour autoriser un accès dans le compartiment.

Selon une autre variante, la requête est reçue d'un dispositif de communication mobile via une liaison sans fil entre le véhicule et le dispositif de communication mobile.

Selon une variante supplémentaire, le dispositif de verrouillage correspond à une serrure électrique.

Selon encore une variante, la commande de verrouillage entraine un déplacement d'un pêne de la serrure électrique en position de verrouillage dans une gâche de la serrure électrique.

Selon une variante additionnelle, la commande de déverrouillage entraine un retrait du pêne de la gâche.

Selon un deuxième aspect, l'invention concerne un dispositif de contrôle d'un dispositif de verrouillage d'une trappe d'accès à un compartiment de roue de secours prévu dans un coffre d'un véhicule, le dispositif comprenant une mémoire associée à un processeur configuré pour la mise en oeuvre des étapes du procédé selon le premier aspect de l'invention.

Selon un troisième aspect, l'invention concerne un système de verrouillage d'une trappe d'accès à un compartiment de roue de secours prévu dans un coffre d'un véhicule, le système comprenant le dispositif tel que décrit ci-dessus selon le deuxième aspect de l'invention et un dispositif de verrouillage relié en communication avec le dispositif tel que décrit ci-dessus selon le deuxième aspect de l'invention.

Selon un quatrième aspect, l'invention concerne un véhicule, par exemple de type automobile, comprenant un dispositif tel que décrit ci-dessus selon le deuxième aspect de l'invention ou un système tel que décrit ci-dessus selon le troisième aspect de l'invention.

Selon un cinquième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un sixième aspect, l'invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de l'invention ressortiront de la description des modes de réalisation non limitatifs de l'invention ci-après, en référence aux figures 1 à 4 annexées, sur lesquelles :
[Fig. 1] illustre schématiquement un système de communication comprenant un véhicule et un dispositif de communication mobile, selon un exemple de réalisation particulier de la présente invention ;
[Fig. 2] illustre schématiquement une partie du coffre du véhicule de la figure 1, selon un exemple de réalisation particulier de la présente invention ;
[Fig. 3] illustre schématiquement un dispositif configuré pour contrôler un dispositif de verrouillage d'une trappe d'accès au compartiment de roue de secours prévu dans le coffre de la figure 2, selon un exemple de réalisation particulier de la présente invention ;
[Fig. 4] illustre un organigramme des différentes étapes d'un procédé de contrôle d'un dispositif de verrouillage d'une trappe d'accès à un compartiment de roue de secours prévu dans le coffre de la figure 2, selon un exemple de réalisation particulier de la présente invention.

### Description des modes de réalisation

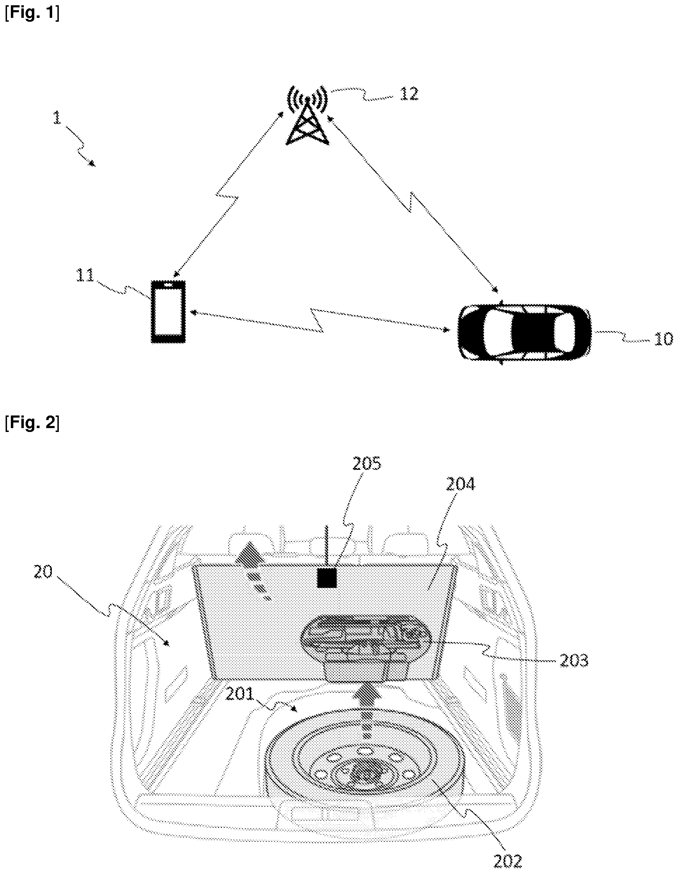

Un procédé et un dispositif de contrôle d'un dispositif de verrouillage d'une trappe d'accès à un compartiment de roue de secours prévu dans le coffre d'une voiture vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de l'invention, le contrôle d'un dispositif de verrouillage d'une trappe recouvrant un compartiment de roue de secours arrangé dans le fond du coffre d'un véhicule (la trappe donnant accès au compartiment en position relevée) comprend la réception d'une requête d'activation d'un service prévoyant une autorisation d'accès au coffre du véhicule. A la détection de l'ouverture de l'ouvrant du coffre (porte de coffre ou hayon) donnant accès au coffre, une commande de verrouillage du dispositif de verrouillage de la trappe d'accès au compartiment de la roue de secours est transmise, par exemple depuis un calculateur du véhicule à destination du dispositif de verrouillage.

Le contrôle du dispositif de verrouillage en position de verrouillage maintient la trappe en position verrouillée et empêche quiconque ayant accès au coffre d'accéder au compartiment de roue de secours, limitant ainsi les risques de vol ou de dépôt de colis dans le compartiment à l'insu du propriétaire ou du conducteur du véhicule. La sécurité du compartiment de roue de secours contre les intrusions s'en trouve améliorée.

[Fig. 1] illustre schématiquement un environnement 1 de communication entre un dispositif de communication mobile 11 et un véhicule 10, selon un exemple de réalisation particulier et non limitatif de la présente invention.

Le véhicule 10 est un véhicule à moteur thermique, à moteur(s) électrique(s) ou encore un véhicule hybride avec un moteur thermique et un ou plusieurs moteurs électriques.

Le dispositif 11 est un dispositif de télécommunication mobile, par exemple un téléphone intelligent ou « smartphone », une tablette, une montre connectée, un ordinateur ou un ordinateur portable.

Le véhicule 10 et le dispositif mobile 11 sont connectés l'un à l'autre, par exemple par l'intermédiaire d'une liaison radio, soit directement ou via une infrastructure de réseau mobile terrestre, tel qu'un réseau de type cellulaire par exemple. L'infrastructure de réseau comprend une ou plusieurs antennes 12. Les données échangées entre le véhicule 10 et le dispositif mobile 11 transitent par exemple par l'intermédiaire d'un ou plusieurs serveurs, par exemple dans le « cloud » (ou « nuage » en français), ce ou serveurs ayant la charge de gérer le réseau cellulaire. Le réseau mobile correspond par exemple à un réseau 4G (ou LTE Advanced selon 3GPP release 10 - version 10) ou 5G.

Lorsque le véhicule 10 est en communication directe avec le dispositif mobile 11, la connexion est par exemple de type Wifi^{®} ou Bluetooth^{®}.

[Fig. 2] illustre schématiquement le coffre 20 du véhicule 10, selon un exemple de réalisation particulier et non limitatif de la présente invention.

La figure 2 illustre le coffre 20 vue depuis l'arrière du véhicule 10, l'ouvrant permettant d'accéder au coffre 20 étant en position ouverte.

Le coffre 20 comprend dans sa partie inférieure, c'est-à-dire en dessous d'un plancher correspondant au fond du coffre 20 un compartiment 201 ou un logement prévu pour recevoir une roue de secours 202, ainsi qu'optionnellement une boite à outils 203 comprenant des outils utiles au remplacement d'une roue du véhicule 10 par la roue de secours 202.

Le compartiment 202 est fermé ou recouvert par une trappe 204 donnant accès au compartiment 201 et à la roue de secours 202 en position relevée, tel qu'illustré sur la figure 2. En position horizontale, la trappe 204 forme le plancher du coffre, fermant et masquant ainsi le compartiment 201, permettant à un utilisateur du véhicule 10 de déposer des bagages ou colis dans le coffre 201 sur cette trappe 204 formant le plancher du coffre 20.

Un dispositif de verrouillage 205 est associé à cette trappe 204. Le dispositif de verrouillage 205 est avantageusement configuré pour, dans une position ou configuration dite de verrouillage, empêcher le retrait de la trappe 204 lorsque cette dernière ferme le compartiment 201, c'est-à-dire lorsque la trappe 204 repose en position horizontale. Le dispositif de verrouillage 205 est avantageusement configuré pour, dans une position ou configuration dite de déverrouillage, autoriser le retrait ou le pivotement de la trappe 204 (la trappe 204 étant alors dans une position d'ouverture illustrée sur la figure 2), laissant libre ou autorisant un accès au compartiment 201 et à la roue de secours 202.

Le dispositif de verrouillage 205 correspond par exemple à une serrure électrique avec une première partie comprenant un pêne fixé sur la trappe 204 et une deuxième partie comprenant une gâche formée en regard de la première partie dans la structure du coffre 20 ou la carrosserie du véhicule 10. Sur la figure 2, le dispositif de verrouillage 205 est arrangé sur le bord longitudinal de la trappe 204 faisant face à l'ouvrant du coffre 20. Selon un autre exemple de réalisation, le dispositif de verrouillage 205 est arrangé sur un bord latéral de la trappe. Selon une variante de réalisation, plusieurs dispositifs de verrouillage sont associés à la trappe 204, par exemple deux dispositifs de verrouillage chacun arrangé sur les bords latéraux opposés de la trappe ou deux dispositifs arrangés sur le bord longitudinal faisant face à l'ouverture du coffre 20.

Selon un autre exemple, le dispositif de verrouillage correspond à un ensemble formé d'un actionneur électrique et d'un vérin rotatif dont la translation d'une position de déverrouillage à une position de verrouillage (et inversement) est contrôlée par l'actionneur électrique. Cet ensemble est avantageusement fixé à la trappe 204. Dans la position de verrouillage, le vérin rotatif pénètre dans un trou ou un évidement formé dans la carrosserie du coffre, en regard du dispositif formé de l'actionneur et du vérin, et prévu pour recevoir le vérin en position de verrouillage et ainsi empêcher le retrait de la trappe 204.

Un processus de contrôle du dispositif de verrouillage 205 de la trappe 204 d'accès au compartiment 201 du véhicule 10 est avantageusement mis en oeuvre par un ou plusieurs calculateurs du système embarqué du véhicule 10, par exemple un calculateur de type VSM (de l'anglais « Vehicle Supervisor Module » ou en français « Module de supervision véhicule ») en charge de la coordination des fonctions électroniques véhicules de l'habitacle et en charge de fournir l'infrastructure réseau d'interconnexion de l'ensemble des autres calculateurs du véhicule 10.

Dans une première opération, une requête est reçue par le calculateur. Cette requête correspond à une requête commandant l'activation d'un service comprenant une autorisation d'ouverture de l'ouvrant du coffre 20. Une telle autorisation correspond par exemple à une commande de déverrouillage de l'ouvrant du coffre pour permettre à une personne d'ouvrir le coffre pour accéder à l'intérieur du coffre (par exemple pour y déposer un colis).

Un tel service correspond par exemple à un service de type « livraison dans le coffre » permettant au propriétaire ou au conducteur du véhicule 10 d'autoriser qu'une livraison d'un colis dans le coffre du véhicule 10 soit possible, y compris en l'absence du propriétaire ou du conducteur dans le véhicule 10.

Selon un premier exemple, une telle requête est par exemple reçue du dispositif de communication mobile 11 via une liaison sans fil de type LTE-Advanced, Wifi^{®} ou Bluetooth^{®} établie entre le dispositif de communication mobile 11 et le véhicule 10. Cette requête est par exemple transmise par le dispositif 11 via une liaison directe entre le dispositif mobile 11 et le véhicule 10 (par exemple si la distance entre le dispositif mobile 11 et le véhicule 10 est inférieure à un seuil dépendant de la technologie radio utilisée) ou via l'infrastructure réseau comprenant l'antenne 12. La requête est par exemple reçue par une unité de contrôle télématique, dite TCU (de l'anglais « Telematic Control Unit »), laquelle unité TCU transmet la requête au calculateur VSM. La TCU est avantageusement relié à une ou plusieurs antennes du véhicule 1 et est configurée pour contrôler les différents systèmes de communication du véhicule, tels que par exemple le système de localisation de type GPS (de l'anglais « Global Positioning System » ou en français « Système de localisation global ») et/ou le système de communication mobile (par exemple GSM, GPRS, Wi-Fi, Bluetooth, LTE). La TCU et le VSM font par exemple partie d'une architecture multiplexée pour la réalisation de différents services utiles pour le bon fonctionnement du véhicule 10. Les calculateurs TCU et VSM communiquent et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

Selon ce premier exemple, la génération et la transmission de la requête sont par exemple déclenchée par une action utilisateur, c'est-à-dire par l'entrée du commande tactile ou vocale. La requête est par exemple générée par une application mobile installée sur le dispositif de communication mobile 11, le propriétaire ou le conducteur du véhicule 10 activant le service par appui sur un bouton ou une icône d'une interface homme-machine, dite IHM, de l'application mobile affichée sur un écran du dispositif 11, la requête étant alors générée et transmise automatiquement à destination du véhicule 10.

La requête comprend par exemple des données ou paramètres associés à la commande de déverrouillage de l'ouvrant arrière du véhicule 10, par exemple des données représentatives d'un instant et d'une durée pendant laquelle l'ouvrant arrière reste déverrouillé avant de se verrouiller à nouveau automatiquement.

Selon un deuxième exemple, la requête est générée à partir d'une IHM affichée sur un écran arrangé dans l'habitacle du véhicule 10, par exemple au niveau de la planche de bord. Selon ce deuxième exemple, le conducteur du véhicule 10 contrôle l'activation du service depuis le véhicule 10, par exemple avant de quitter le véhicule 10.

Dans une deuxième opération, l'ouverture de l'ouvrant arrière (porte de coffre ou hayon) du véhicule 10 est détectée par le calculateur en charge du processus, par exemple le calculateur VSM. L'ouvrant arrière est par exemple ouvert par un livreur d'un colis commandé par le propriétaire ou le conducteur du véhicule 10 qui a autorisé le déverrouillage de l'ouvrant arrière, par exemple sur une plage horaire déterminée comprenant l'horaire de livraison prévu, dans le cadre du service « livraison dans le coffre ». L'ouverture de l'ouvrant déclenche par exemple la transmission de données représentatives d'ouverture de l'ouvrant arrière au calculateur. De telles données sont par exemple transportées dans ou correspondent à un signal électrique émis par un capteur arrangé dans le mécanisme de verrouillage de l'ouvrant arrière à destination du calculateur.

Une information représentative de la détection d'ouverture de l'ouvrant arrière est par exemple transmise, selon une variante optionnelle de réalisation, à destination du dispositif de communication mobile 11 pour alerter / informer le propriétaire ou le conducteur du véhicule 10. Une telle information prend par exemple la forme d'un message ou d'un contenu graphique affiché sur l'écran du dispositif 11 et/ou d'un contenu sonore ou vocale rendu par un haut-parleur du dispositif 11.

Dans une troisième opération, suivant la détection de l'ouverture de l'ouvrant arrière du véhicule 10 à la deuxième opération, le calculateur transmet une commande de verrouillage du ou des dispositifs de de verrouillage 205 de la trappe d'accès 204 au compartiment 201 comprenant la roue de secours 202. Une telle commande est transmise à destination du dispositif de verrouillage 205 (ou de chaque dispositif de verrouillage) qui se met en position de verrouillage et empêche le retrait ou le pivotement de la trappe 204, bloquant ou interdisant ainsi tout accès au compartiment 201. Ainsi, l'accès à l'habitacle à la personne ayant accès au coffre est empêché par le maintien du dispositif de verrouillage 205 en position verrouillée, empêchant l'ouverture du compartiment 201 par le retrait ou le pivotement de la trappe 204 qui reste en position horizontale, fermant le compartiment 201.

Tant que l'ouvrant arrière reste ouvert, le ou les dispositifs de verrouillage 205 restent en position verrouillée et maintiennent la trappe 204 en position horizontale, interdisant tout accès au compartiment 201.

Dans une quatrième opération, la fermeture de l'ouvrant arrière (porte de coffre ou hayon) du véhicule 10 est détectée par le calculateur en charge du processus, par exemple le calculateur VSM. L'ouvrant arrière est par exemple fermé par le livreur ayant effectué la livraison du colis dans le cadre du service « livraison dans le coffre ». La fermeture de l'ouvrant déclenche par exemple la transmission de données représentatives de fermeture de l'ouvrant arrière au calculateur. De telles données sont par exemple transportées par ou correspondent à un signal électrique émis par un capteur arrangé dans le mécanisme de verrouillage de l'ouvrant arrière à destination du calculateur.

Une information représentative de la détection de fermeture de l'ouvrant arrière est par exemple transmise, selon une variante optionnelle de réalisation, à destination du dispositif de communication mobile 11 pour alerter / informer le propriétaire ou le conducteur du véhicule 10. Une telle information prend par exemple la forme d'un message ou d'un contenu graphique affiché sur l'écran du dispositif 11 et/ou d'un contenu sonore ou vocale rendu par un haut-parleur du dispositif 11.

Dans une cinquième opération, suivant la détection de la fermeture de l'ouvrant arrière du véhicule 10 à la quatrième opération, le calculateur transmet une commande de déverrouillage à destination du dispositif de verrouillage 205 (ou à chaque dispositif de verrouillage). A réception de la commande, le dispositif de verrouillage 205 passe en position déverrouillée, permettant un retrait ou un pivotement de la trappe 204 pour pouvoir accéder au compartiment 201 et à la roue de secours si nécessaire.

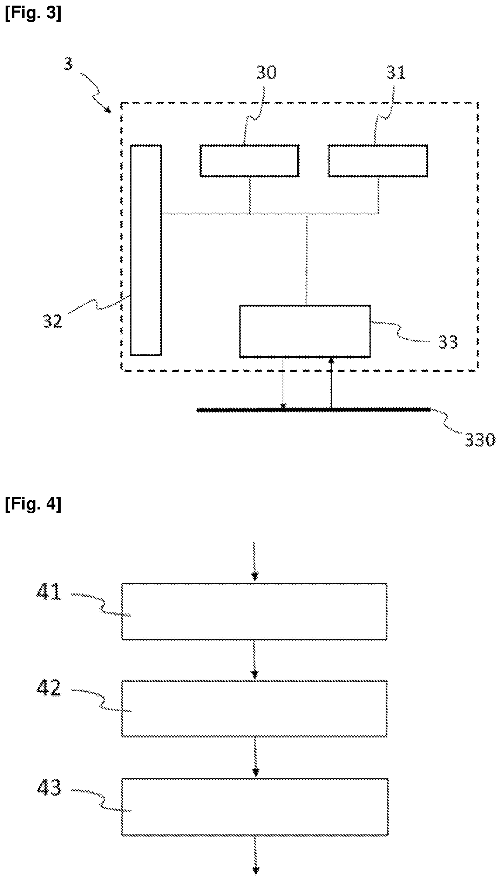

[Fig. 3] illustre schématiquement un dispositif 3 configuré pour contrôler un ou plusieurs dispositifs de verrouillage d'une trappe d'accès à un compartiment de roue de secours prévu dans le coffre d'un véhicule, selon un exemple de réalisation particulier et non limitatif de la présente invention. Le dispositif 3 correspond par exemple à un dispositif embarqué dans le véhicule 10, par exemple un calculateur, par exemple un calculateur de type VSM.

La figure 3 illustre également un dispositif 3 correspondant à un dispositif de communication mobile tel que le dispositif 11.

Le dispositif 3 est par exemple configuré pour la mise en oeuvre des opérations décrites en regard des figure 1 et 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels. Selon différents modes de réalisation particuliers, le dispositif 3 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon un mode de réalisation particulier et non limitatif, le dispositif 3 comprend un bloc 32 d'éléments d'interface pour communiquer avec des dispositifs externes, par exemple un serveur distant ou le « cloud », d'autres noeuds du réseau ad hoc. Les éléments d'interface du bloc 32 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Définition Multimedia Interface », ou « Interface Multimedia Haute Définition » en français) ;
- interface LIN (de l'anglais « Local Interconnect Network », ou en français « Réseau interconnecté local »).

Des données sont par exemples chargées vers le dispositif 3 via l'interface du bloc 32 en utilisant un réseau Wi-Fi^{®} tel que selon IEEE 802.11, un réseau ITS G5 basé sur IEEE 802.1 1p ou un réseau mobile tel qu'un réseau 4G (ou LTE Advanced selon 3GPP release 10 - version 10) ou 5G, notamment un réseau LTE-V2X.

Selon un autre mode de réalisation particulier, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un mode de réalisation particulier supplémentaire, le dispositif 3 peut fournir des signaux de sortie à un ou plusieurs dispositifs externes, tels qu'un écran d'affichage, un ou des haut-parleurs et/ou d'autres périphériques via respectivement des interfaces de sortie non représentées.

[Fig. 4] illustre un organigramme des différentes étapes d'un procédé de contrôle d'un ou plusieurs dispositifs de verrouillage d'une trappe d'accès à un compartiment de roue de secours prévu dans le coffre d'un véhicule, selon un exemple de réalisation particulier et non limitatif de la présente invention. Le procédé est par exemple mis en oeuvre par un dispositif embarqué dans le véhicule 10 ou par le dispositif 3 de la figure 3.

Dans une première étape 41, une requête d'activation d'un service configuré pour permettre un accès à l'intérieur d'un coffre du véhicule est reçue.

Dans une deuxième étape 42, une ouverture d'un ouvrant donnant accès à l'intérieur du coffre est détectée.

Dans une troisième étape 43, une commande de verrouillage du dispositif de verrouillage de la trappe d'accès au compartiment de roue de secours dans le coffre du véhicule est transmise, par exemple à destination du dispositif de verrouillage ou d'un calculateur en charge de contrôler le dispositif de verrouillage, pour prévenir tout accès au compartiment de roue de secours et à la roue de secours.

Selon une variante de réalisation, les variantes et exemples des opérations décrits en relation avec les figures 1 et 2 s'appliquent aux étapes du procédé de la figure 4.

Bien entendu, l'invention ne se limite pas aux modes de réalisation décrits ci-avant mais s'étend à un procédé de verrouillage / déverrouillage de la trappe d'accès, ainsi qu'au dispositif ou au système configuré pour la mise en oeuvre d'un tel procédé.

L'invention concerne également un système comprenant le dispositif 3, par exemple un calculateur VSM, et un ou plusieurs dispositifs de verrouillage (par exemple une ou plusieurs serrures électriques) reliés en communication au dispositif 3, par exemple via une liaison filaire.

L'invention concerne également un véhicule, par exemple automobile ou plus généralement un véhicule autonome à moteur terrestre, comprenant le dispositif 3 de la figure 3 ou le système ci-dessus.

## Revendications

1. Procédé de contrôle d'un dispositif de verrouillage (205) d'une trappe d'accès (204) à un compartiment (201) de roue de secours (202) prévu dans un coffre (20) d'un véhicule (10), ledit procédé étant mis en oeuvre par au moins un calculateur embarqué dans ledit véhicule (10), ledit procédé comprenant les étapes suivantes :
- réception (41) d'une requête d'activation d'un service configuré pour permettre un accès à l'intérieur d'un coffre (20) dudit véhicule (10) ;
- détection (42) d'une ouverture d'un ouvrant donnant accès à l'intérieur dudit coffre (20) ;
- transmission (43) d'une commande de verrouillage dudit dispositif de verrouillage (205) de ladite trappe d'accès (204) pour prévenir tout accès dans ledit compartiment (201).

2. Procédé selon la revendication 1, comprenant en outre les étapes suivantes :
- détection d'une fermeture dudit ouvrant donnant accès à l'intérieur dudit coffre (20) ;
- transmission d'une commande de déverrouillage dudit dispositif de verrouillage (205) de ladite trappe d'accès (204) pour autoriser un accès dans ledit compartiment (201).

3. Procédé selon la revendication 1 ou 2, pour lequel ladite requête est reçue d'un dispositif de communication mobile (11) via une liaison sans fil entre ledit véhicule (10) et ledit dispositif de communication mobile (11).

4. Procédé selon l'une des revendications 1 à 3, pour lequel ledit dispositif de verrouillage (205) correspond à une serrure électrique.

5. Procédé selon la revendication 4, pour lequel ladite commande de verrouillage entraine un déplacement d'un pêne de ladite serrure électrique en position de verrouillage dans une gâche de ladite serrure électrique.

6. Procédé selon la revendication 5 en dépendance de la revendication 2, pour lequel ladite commande de déverrouillage entraine un retrait dudit pêne de ladite gâche.

7. Dispositif (3) de contrôle d'un dispositif de verrouillage (205) d'une trappe d'accès (204) à un compartiment (201) de roue de secours (202) prévu dans un coffre (20) d'un véhicule (10), ledit dispositif (3) comprenant une mémoire (31) associée à au moins un processeur (30) configuré pour la mise en oeuvre des étapes du procédé selon l'une quelconque des revendications 1 à 6.

8. Système de verrouillage d'une trappe d'accès (204) à un compartiment (201) de roue de secours (202) prévu dans un coffre (20) d'un véhicule (10), ledit système comprenant le dispositif (3) selon la revendication 7 et un dispositif de verrouillage (205) relié en communication avec ledit dispositif (3).

9. Véhicule (10) comprenant le dispositif (3) selon la revendication 7 ou le système selon la revendication 8.

10. Programme d'ordinateur comportant des instructions pour la mise en oeuvre du procédé selon l'une quelconque des revendications 1 à 6, lorsque ces instructions sont exécutées par un processeur.

11. Support d'enregistrement lisible par un ordinateur sur lequel est enregistré un programme d'ordinateur comprenant des instructions pour l'exécution des étapes du procédé selon l'une quelconque des revendications 1 à 6.

## Patentansprüche

1. Verfahren zum Testen einer Verriegelungsvorrichtung (205) von einer Zugangsluke (204) zu einem Reserveradfach (201) (202), die in einem Kofferraum (20) eines Fahrzeugs (10) vorgesehen ist, wobei das Verfahren von mindestens einem Bordcomputer in dem Fahrzeug (10) implementiert wird, wobei das Verfahren die folgenden Schritte umfasst:
- Empfangen (41) einer Anforderung zur Aktivierung eines Dienstes, der so konfiguriert ist, dass er den Zugang zum Inneren eines Kofferraums (20) des Fahrzeugs (10) ermöglicht;
- Detektion (42) einer Öffnung eines Flügels, die Zugang zum Inneren des Tresors (20) gewährt;
- Übertragung (43) einer Steuerung zum Verriegeln der Verriegelungsvorrichtung (205) der Zugangsluke (204), um jeglichen Zugang zu dem Fach (201) zu verhindern.

2. Verfahren nach Anspruch 1, das ferner die folgenden Schritte umfasst:
- Erkennen eines Schließens des Flügels, das Zugang zum Inneren des Tresors (20) ermöglicht;
- Übertragung eines Befehls zum Entriegeln der Verriegelungsvorrichtung (205) der Zugangsluke (204), um den Zugang zu dem Fach (201) zu ermöglichen.

3. Verfahren nach Anspruch 1 oder 2, wobei die Anforderung von einer mobilen Kommunikationseinrichtung (11) über eine drahtlose Verbindung zwischen dem Fahrzeug (10) und der mobilen Kommunikationseinrichtung (11) empfangen wird.

4. Verfahren nach einem der Ansprüche 1 bis 3, wobei die Verriegelungsvorrichtung (205) einem elektrischen Schloss entspricht.

5. Verfahren nach Anspruch 4, wobei die Verriegelungssteuerung bewirkt, dass ein Bolzen des elektrischen Schlosses in die Verriegelungsposition in einem Schließblech des elektrischen Schlosses bewegt wird.

6. Verfahren nach Anspruch 5 in Abhängigkeit von Anspruch 2, wobei die Auslösesteuerung bewirkt, dass der Bolzen von dem Schlagbolzen entfernt wird.

7. Betätigungseinrichtung (3) für eine Verriegelungsvorrichtung (205) einer Zugangsluke (204) zu einem Reserveradfach (201) (202), die in einem Kofferraum (20) eines Fahrzeugs (10) vorgesehen ist, wobei die Vorrichtung (3) einen Speicher (31) umfasst, der mindestens einem Prozessor (30) zugeordnet ist, der zum Ausführen der Verfahrensschritte gemäß einem der Ansprüche 1 bis 6 konfiguriert ist.

8. Verriegelungssystem für eine Zugangsluke (204) zu einem Reserveradfach (201) (202), das in einem Kofferraum (20) eines Fahrzeugs (10) vorgesehen ist, wobei das System die Vorrichtung (3) nach Anspruch 7 und eine Verriegelungsvorrichtung (205) umfasst, die in Verbindung mit der Vorrichtung (3) steht.

9. Fahrzeug (10), umfassend die Vorrichtung (3) nach Anspruch 7 oder das System nach Anspruch 8.

10. Computerprogramm, das Anweisungen zum Ausführen des Verfahrens nach einem der Ansprüche 1 bis 6 enthält, wenn solche Anweisungen von einem Prozessor ausgeführt werden.

11. Computerlesbares Aufzeichnungsmedium, auf dem ein Computerprogramm gespeichert ist, einschließlich Anweisungen zur Durchführung der Verfahrensschritte nach einem der Ansprüche 1 bis 6.

## Claims

1. Method for testing a locking device (205) from an access hatch (204) to a spare wheel compartment (201) (202) provided in a trunk (20) of a vehicle (10), said method being implemented by at least one on-board computer in said vehicle (10), said method comprising the following steps:
- receiving (41) a request to activate a service configured to allow access to the inside of a trunk (20) of said vehicle (10);
- detection (42) of an opening of a sash giving access to the interior of said safe (20);
- transmission (43) of a control for locking said locking device (205) of said access hatch (204) to prevent any access to said compartment (201).

2. A method according to claim 1, further comprising the following steps:
- detecting a closing of said sash giving access to the interior of said safe (20);
- transmission of a command for unlocking said locking device (205) of said access hatch (204) to allow access to said compartment (201).

3. The method of claim 1 or 2, wherein said request is received from a mobile communication device (11) via a wireless link between said vehicle (10) and said mobile communication device (11).

4. A method according to one of claims 1 to 3, wherein said locking device (205) corresponds to an electric lock.

5. The method of claim 4, wherein said locking control causes a bolt of said electric lock to be moved to the locking position in a strike plate of said electric lock.

6. A method according to claim 5 in dependence on claim 2, wherein said release control causes said bolt to be removed from said striker.

7. A control device (3) for a locking device (205) of an access hatch (204) to a spare wheel compartment (201) (202) provided in a trunk (20) of a vehicle (10), said device (3) comprising a memory (31) associated with at least one processor (30) configured for carrying out the process steps according to any one of claims 1 to 6.

8. A locking system for an access hatch (204) to a spare wheel compartment (201) (202) provided in a trunk (20) of a vehicle (10), said system comprising the device (3) according to claim 7 and a locking device (205) connected in communication with said device (3).

9. A vehicle (10) comprising the device (3) according to claim 7 or the system according to claim 8.

10. A computer program containing instructions for carrying out the method according to any one of claims 1 to 6, when such instructions are executed by a processor.

11. A computer-readable recording medium on which a computer program is stored including instructions for performing the process steps according to any one of claims 1 to 6.
